# EUROPEAN PATENT SPECIFICATION

(11) **EP 2 851 541 B1**
(45) Date of publication and mention of the grant of the patent: **31.10.2018**
(21) Application number: 14184319.3
(22) Date of filing: 10.09.2014
(51) Int. Cl.: F02D 41/00, F02D 41/30, F02D 35/02

(54) **Engine control device**
Motorsteuerungsvorrichtung
Dispositif de commande de moteur

(30) Priority: 24.09.2013 JP 2013196738
(43) Date of publication of application: 25.03.2015
(73) Proprietor: Mitsubishi Jidosha Kogyo Kabushiki Kaisha, Tokyo 108-8410 (JP)
(72) Inventor: Miyamoto, Katsuhiko, Tokyo, 108-8410 (JP)
(74) Representative: Vossius & Partner Patentanwälte Rechtsanwälte mbB

(56) References cited:
- WO-A1-2006/011537
- US-A1- 2006 037 583
- US-A1- 2006 243 249
- US-A1- 2012 277 979

## Description

### BACKGROUND

### 1. Technical Field

The present invention relates to an engine control device including a cylinder injection valve and a port injection valve.

### 2. Background Art

Conventionally, there is known an internal combustion engine including a cylinder injection valve (hereinafter, a cylinder injection is referred to as "a direct injection" and a cylinder injection valve is referred to as "a direct injection valve") for directly injecting fuel into a cylinder and a port injection valve for injecting fuel into an intake port.

This type of internal combustion engine employs a control device and a control method in which the direct injection valve and the port injection valve can be used selectively or in combination, depending on the operating conditions. Namely, the fuel injection by only the port injection valve or the fuel injection by only the direct injection valve or the fuel injection by both injection valves can be used, depending on the operating conditions.

Further, for example, Patent Document 1 discloses a technique for avoiding and suppressing the occurrence of knocking by adjusting a ratio between the fuel injection by the port injection valve and the fuel injection by the direct injection valve.

Patent Document 1: JP-A-2006-0348799

The technique disclosed in Patent Document 1 is adapted to avoid and suppress the occurrence of knocking by adjusting a ratio between the fuel injection by the port injection valve and the fuel injection by the direct injection valve. However, in this technique, the ratio adjustment is performed without exception. Therefore, it is not possible to correspond to variation in the combustion state or variation in the occurrence of knocking for respective cylinders when an engine is provided with a plurality of cylinders.

Further, in order to avoid and suppress the occurrence of knocking, the ignition timing is delayed (retarded) for the cylinder where the knocking occurs. In this case, there is also a problem that variation in torque is caused for the respective cylinders and thus deterioration of driveability and engine noise is caused. Furthermore, in the case where the ignition timing of all cylinders coincides with the ignition timing of the cylinder where a retard quantity is the largest, there is also a problem that reduction in output for a high-load region is caused.

The present invention has been made in consideration of the above situation and an object thereof is to avoid and suppress reduction in output and variation in torque due to the variation in the ignition timing, which occurs for the respective cylinders, while suppressing the occurrence of knocking when an engine is provided with a plurality of cylinders. A further example is disclosed in the prior art document US 2006/0243249.

### SUMMARY OF THE INVENTION

In order to solve the above matter, an engine control device includes:
a plurality of cylinders;
a direct injection valve that directly injects fuel into the cylinders;
a port injection valve that injects fuel into an intake port;
a ratio determination unit that determines a ratio between a fuel injection quantity by the direct injection valve and a fuel injection quantity by the port injection valve, for respective cylinders;
a knock detection unit that detects knocking that occurs in the respective cylinders; and
an ignition timing adjustment unit that sets ignition timing of the respective cylinders based on information on occurrence of the knocking by the knock detection unit,
wherein the ratio determination unit adjusts, for the respective cylinders, a ratio of the injection quantity between the fuel injection by the direct injection valve and the fuel injection by the port injection valve so that variation in the ignition timing among the cylinders which is determined by the ignition timing adjustment unit falls within a predetermined range.

The predetermined range may be set toward a retard side from a reference value, the reference value being defined as the ignition timing of the cylinder where the ignition timing determined by the ignition timing adjustment unit in a state before the adjustment of the ratio of the injection quantity is the earliest. Specifically, the ratio of the injection quantity is set so that the ignition timing of all cylinders falls within a predetermined range (angle) from the ignition timing of the cylinder where the ignition timing is the earliest.

The predetermined range may be set so that an average value of the ignition timing of the respective cylinders determined by the ignition timing adjustment unit in a state before the adjustment of the ratio of the injection quantity is a median value of the predetermined range. Specifically, the ratio of the injection quantity is adjusted so that an average value of the ignition timing of the respective cylinders is a median value of the predetermined range and the ignition timing of all cylinders falls within a predetermined range (angle) whose median value is the average value.

As a method of making variation in the ignition timing among the cylinders falling within the predetermined range, the following method can be employed. For example, the ratio determination means advances the ignition timing determined by the ignition timing adjustment means by increasing the ratio of the fuel injection by the direct injection valve and retards the ignition timing determined by the ignition timing adjustment means by decreasing the ratio of the fuel injection by the direct injection valve.

In the above configurations, the engine control device further includes an operating condition storage unit that stores:
information on occurrence of knocking detected by the knock detection unit;
variation in the ignition timing among the cylinders, which is determined by the ignition timing adjustment unit based on the information on occurrence of knocking;
the predetermined range; and
the ratio of the injection quantity between the fuel injection by the direct injection valve and the fuel injection by the port injection valve, which is determined by the ratio determination unit,
wherein the ratio determination means adjusts the ratio of the injection quantity between the fuel injection by the direct injection valve and the fuel injection by the port injection valve, based on the information stored in the operating condition storage means.

Typically, the fuel injected from the direct injection valve and the fuel injected from the port injection valve are supplied from the same fuel tank. Specifically, it is typical that the fuel injected from the direct injection valve and the fuel injected from the port injection valve have the same octane number. However, the octane number of the fuel injected from the direct injection valve may be different from that of the fuel injected from the port injection valve.

According to the present invention, a ratio between the injection quantity of the direct injection valve and the injection quantity of the port injection valve is adjusted on the basis of the information on occurrence of knocking so that variation in the ignition timing among the cylinders falls within a predetermined range. Therefore, it is possible to avoid and suppress reduction in output and variation in torque due to the variation in the ignition timing, which occurs for the respective cylinders.

### BRIEF DESCRIPTION OF DRAWINGS

Fig. 1 is a schematic view showing a configuration of an engine control device of the present invention.
Fig. 2 is a schematic view showing a main portion of the engine control device of the present invention.
Fig. 3 (a) and (b) is a graph showing a difference in the retard quantity of knock for respective cylinders.
Fig. 4 is a graph showing a difference in a direct injection ratio and a difference in the retard quantity of knock for the respective cylinders.
Fig. 5 is a map showing a knock control region.
Fig. 6 is a flowchart showing the control by an engine control device of an illustrative embodiment.

### DESCRIPTION OF EMBODIMENT

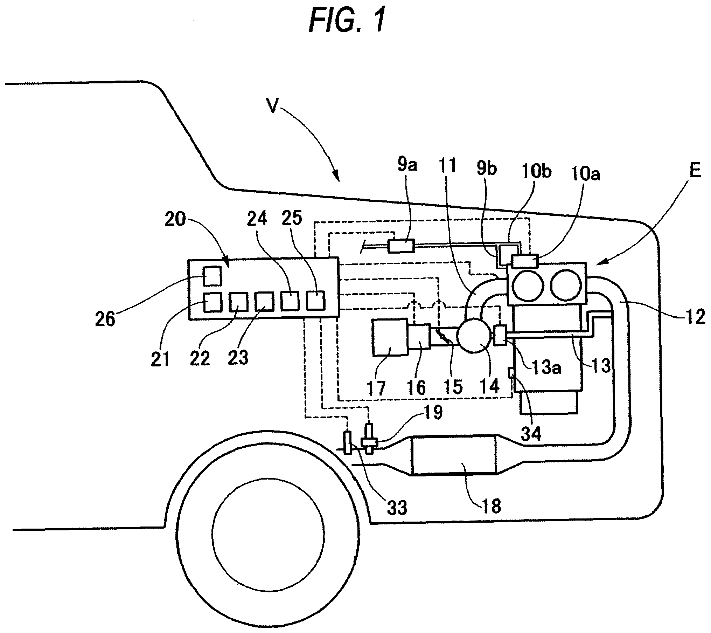

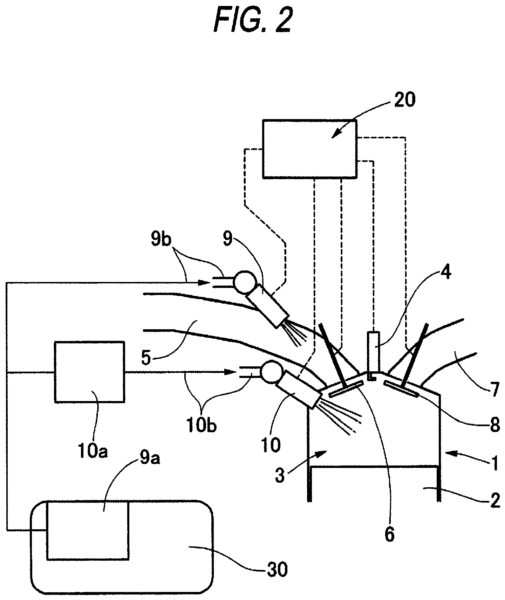

Hereinafter, an illustrative embodiment of the present invention will be described with reference to the drawings. Fig. 1 is a schematic view conceptually showing configurations of an engine control device of the illustrative embodiment and a vehicle V equipped with the engine control device. Further, Fig. 2 is a front sectional view showing a main portion of an engine E.

As shown in Fig. 1 and Fig. 2, an intake manifold 11 is provided in an intake passage of the engine E and adapted to introduce an air-fuel mixture into a combustion chamber 3 through an intake port 5. Further, toward the downstream side from the upstream side of the intake passage, an air cleaner 17, an airflow sensor 16 for detecting an amount of intake air so as to obtain a predetermined air-fuel ratio, a throttle valve 15 for controlling the flow rate of intake air by changing a sectional area of a passage and a surge tank 14 for reducing the flow rate by temporarily storing the inflow of excessive intake air or the like are provided in order.

By an exhaust manifold 12, an exhaust passage of the engine E is drawn from the combustion chamber 3 of the engine E through an exhaust port 7.

As shown in Fig. 2, a spark plug 4 for igniting the fuel in the combustion chamber 3 is provided in a cylinder upper portion of a cylinder 1 within the engine E. Further, a cylinder injection valve (direct injection valve) 10 for directly injecting the fuel into the combustion chamber 3 is provided on the slightly offset position of the cylinder upper portion.

An intake port 5 is provided on the side of the spark plug 4. The intake port 5 is provided with a port injection valve 9 for injecting fuel and an intake valve 6 for opening and closing an outlet on the side of the combustion chamber 3.

Delivery of fuel to the port injection valve 9 and the direct injection valve 10 is performed using a pump 9a provided in a fuel tank 30. The pump 9a feeds the fuel in the fuel tank 30 toward the port injection valve 9 and the direct injection valve 10. Here, since the fuel injection pressure of the direct injection valve 10 is higher than that of the port injection valve 9, a pump 10a for high-pressure direct injection is used in the middle of the supply route leading to the direct injection valve 10.

Injection of fuel from the port injection valve 9 and the direct injection valve 10 can be switched between the injection of fuel and the stop of injection by opening and closing electromagnetic valves, which are respectively provided in the port injection valve 9 and the direct injection valve 10. Further, the increase and decrease of the injection quantity are adjusted.

Further, as shown in Fig. 1, an exhaust gas purifying device 18 is provided in the middle of the exhaust passage of the engine E and a muffler (not shown) as a silencer is provided on the downstream side of the exhaust gas purifying device 18.

A temperature detecting means 33 is provided at the downstream end of the exhaust gas purifying device 18 and adapted to detect the temperature of the exhaust gas purifying device 18, i.e., the temperature of the exhaust gas. Information on the temperature is transmitted via a cable to a control means that is provided in an electronic control unit (ECU) 20 for controlling the engine E.

Further, an air-fuel ratio sensor 19 is provided at the downstream end of the exhaust gas purifying device 18. Information on the air-fuel ratio obtained by the air-fuel ratio sensor 19 is similarly transmitted to the control means of the electronic control unit 20.

The exhaust passage upstream of the exhaust gas purifying device 18 and the space of the intake passage inside the surge tank 14 are connected to each other by an exhaust gas recirculation passage 13. The exhaust gas recirculation passage 13 is opened and closed by an exhaust gas recirculation valve 13a and a portion of the exhaust gas is recirculated into the intake passage as a recirculation gas. Opening and closing of the exhaust gas recirculation valve 13a is controlled by the control means of the electronic control unit 20.

Further, the electronic control unit 20 includes an operating condition determination means 21 for determining the operating conditions of the engine E mounted on the vehicle V.

The operating condition determination means 21 acquires information on the temperature of the cooling water from the engine E and information on the number of revolutions of the engine and the load of the engine E or the like and utilizes the acquired information to control the engine E. The operating condition determination means 21 acquires information on the number of revolutions of the engine based on the information from a crank angle sensor or the like. Further, the operating condition determination means 21 acquires information on the load of the engine based on the information such as a degree of opening of a throttle valve interlocked with an accelerator pedal, a fuel injection quantity, the number of revolutions of the engine and a vehicle speed.

The intake valve 6 and an exhaust vale 8, the spark plug 4, the port injection valve 9 as a fuel injection device, the direct injection valve 10, the fuel pump 9a for feeding fuel to the fuel injection device through the fuel pipe 9b and the high-pressure fuel pump 10a for feeding fuel to the direct injection valve 10 through a fuel pipe 10b, and other equipment required for the operation of the engine are respectively controlled, through cables, by the control means provided in the electronic control unit 20. In the present embodiment, a portion of a computer of the electronic control unit 20 is used as the control means.

Further, as shown in Fig. 1, the electronic control unit 20 includes a direct injection execution means 22, a port injection execution means 23, a ratio determination means 24 and an operating condition storage means 25.

The direct injection execution means 22 has a function of instructing the injection of fuel by the direct injection valve 10. The port injection execution means 23 has a function of instructing the injection of fuel by the port injection valve 9.

The ratio determination means 24 has a function of adjusting a ratio between the fuel injection quantity by the direct injection valve 10 and the fuel injection quantity by the port injection valve 9 when simultaneously performing the injection of fuel of the direct injection valve 10 by the instruction of the direct injection execution means 22 and the injection of fuel of the port injection valve 9 by the instruction of the port injection execution means 23. Further, the ratio determination means 24 has a function of instructing the injection of fuel only by the direct injection valve 10 or the injection of fuel only by the port injection valve 9.

A normal control on the fuel injection is performed by the direct injection execution means 22 and the port injection execution means 23, which are provided in the electronic control unit 20, depending on the operating conditions. Further, on the basis of the following conditions, a control of adjusting the ratio of the injection quantity is performed by the ratio determination means 24 when knocking occurs in the engine E.

A knock detection means 34 is provided in a cylinder block of the engine E and detects knocking that occurs in respective cylinders of the engine E. In the present embodiment, a knock sensor is used as the knock detection means 34 and adapted to detect the presence or absence of the occurrence of knocking according to the values of vibration or the magnitude of vibration. The knock detection means 34 may be provided for the respective cylinders. However, by providing one knock detection means 34 for one cylinder block of the engine E, it is possible to acquire information on the occurrence level of knocking for the respective cylinders based on the information such as the occurrence timing of vibration and an angle of a crank angle sensor. The acquired information on the occurrence of knocking is transmitted to the electronic control unit 20.

Further, the electronic control unit 20 is provided with an ignition timing adjustment means 26 for setting ignition timing in the respective cylinders. Based on the information on the injection timing and injection quantity of fuel supplied to the respective cylinders and the presence and absence of the occurrence of knocking by the knock detection means, the ignition timing adjustment means 26 determines an optimal injection timing for the respective cylinders and gives an ignition command to the spark plug 4.

The operating condition storage means 25 has a function of storing the number of revolutions, load and torque of the engine during operation, the injection quantity, injection timing and ignition timing of fuel, the presence or absence of the occurrence of knocking or the level of the occurrence of knocking, the temperature of exhaust gas, the air-fuel ratio, and values of elements on the other operating conditions. Further, the operating condition storage means 25 stores the information obtained by the operating condition determination means 21. Such information is utilized in a knock control (to be described later).

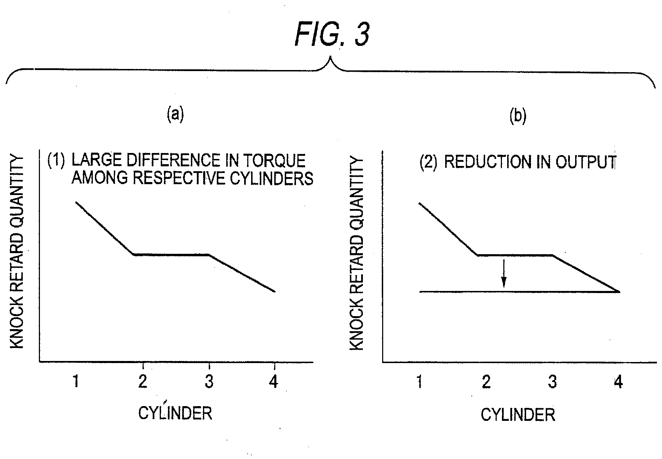

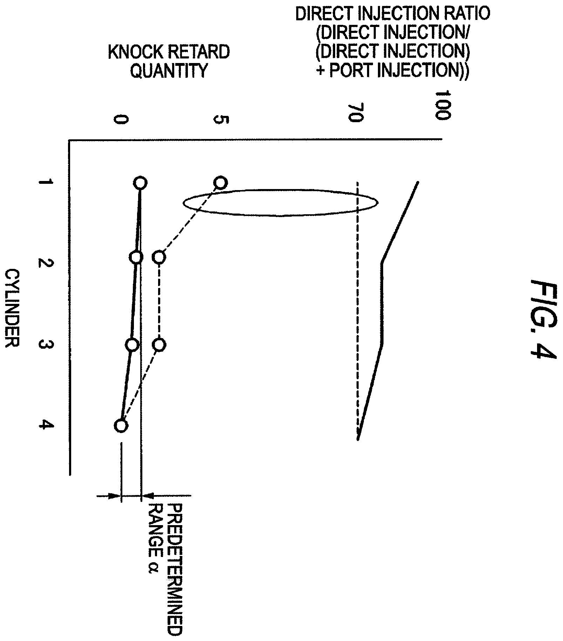

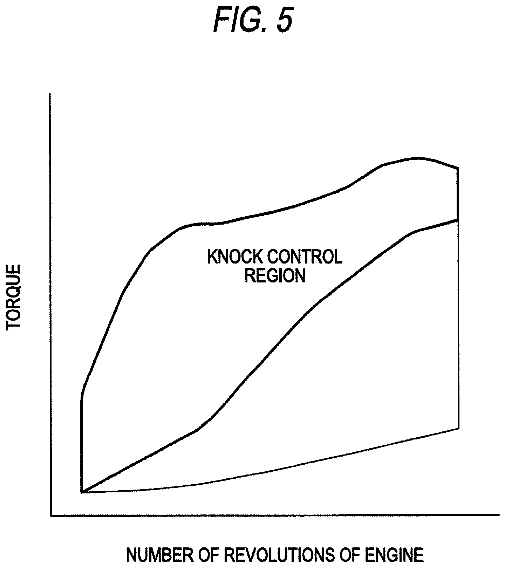

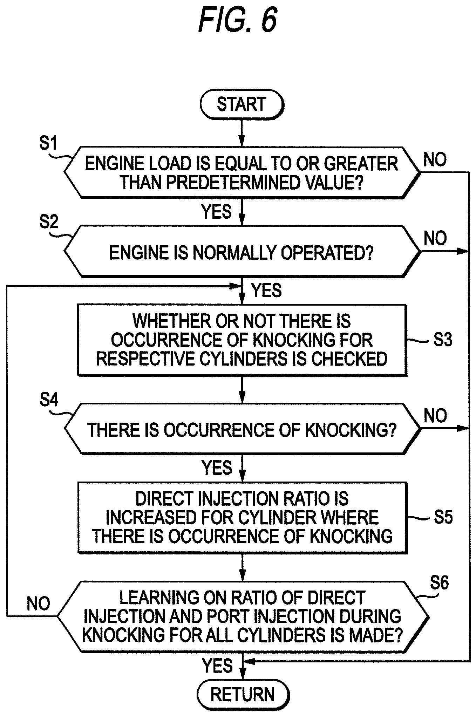

An operation and control method of the engine control device will be described with reference to the graphs of Fig. 3 and Fig. 4, the map of Fig. 5 and the flowchart of Fig. 6.

The fuel injection from the port injection valve 9 causes an air-fuel mixture to be introduced to the combustion chamber 3 through the intake manifold 11 and the intake port 5. Further, the fuel injection from the direct injection valve 10 causes the engine E to be driven, as appropriate. Exhaust gas from the combustion chamber 3 is discharged through the exhaust port 7 and the exhaust manifold 12. The exhaust gas reaches the exhaust gas purifying device 18 through a discharge passage. Further, a portion of the exhaust gas is recirculated into an intake passage through the exhaust gas recirculation passage 13.

Here, it is determined in Step S1 of Fig. 6 whether or not the load of the engine E is equal to or greater than a predetermined value set in advance. Further, it is determined in Step S2 whether or not the engine E is normally operated. The method of acquiring the information on the load of the engine E is as described above. Whether or not the engine E is normally operated is determined on the basis of an opening degree of an accelerator or the number of revolutions, at which an engine load is equal to or greater than a predetermined value set in advance. When variation in the opening degree of the accelerator is small and the operation state is not a sudden acceleration/deceleration condition, it is determined that the engine E is normally operated.

The acquirement of information on the load of the engine E is intended to determine whether or not the current operation state is in an operation region (hereinafter, referred to as a knock region) where knocking is liable to occur. When the current operation state is not in the knock region, the following adjustment of a ratio on injection quantity is not performed. Further, also in the case where the engine E is not normally operated, the following adjustment of the ratio on injection quantity is not performed.

Here, instead of the determination of Step S1, the map shown in Fig. 5 may be used. A portion indicated as a knock control region that is surrounded by a thick line in Fig. 5 refers to the operation region where knocking is liable to occur. By storing such a map in the electronic control unit 20 in advance, the electronic control unit 20 can determine whether or not the current operation state is in the knock region (knock control region), based on the values of torque and the number of revolutions of the engine.

When the current operation state is in the knock region and the engine is normally operated, the process proceeds to Step S3.

In Step S3, it is determined by the knock detection means 34 whether or not there is occurrence of knocking for the respective cylinders. Further, a degree of knocking is also determined when it is determined that there is occurrence of knocking.

When it is determined in Step S4 that there occurs no knocking, a normal operation continues as it is. When it is determined that there occurs knocking, a knock control of the following Step S5 is performed for the cylinder where the knocking occurs.

In the knock control of Step S5, based on the information on knocking from the knock detection means 34, a ratio of the injection quantity between the fuel injection by the direct injection valve 10 and the fuel injection by the port injection valve 9 is adjusted so that variation in the ignition timing among the cylinders, which is determined by the ignition timing adjustment means 26, falls within a predetermined range (a predetermined angle) set in advance.

Normally, when the occurrence of knocking is detected, the ignition timing adjustment means 26 delays the ignition timing for the cylinder where the knocking occurs or all cylinders, i.e., the retard of the ignition timing is automatically performed.

Meanwhile, in the knock control of the present invention, the retard quantity of the respective cylinders, which is calculated by the ignition timing adjustment means 26, is corrected by adjusting the ratio between the fuel injection quantity by the direct injection valve 10 and the fuel injection quantity by the port injection valve 9 so as not to increase the variation in the ignition timing among the cylinders. This is a concept of suppressing the variation in the retard quantity, i.e., the variation in the ignition timing within a predetermined range, instead of performing the direct control to suppress knocking.

For example, it is assumed that, based on the information on the occurrence of knocking, the ignition timing adjustment means 26 performs the retard of the ignition timing in a conventional manner and the retard quantity is adjusted to the state shown Fig. 3 (a). In the graph shown in Fig. 3, the retard quantity of the ignition timing is increased toward the top of the vertical axis. In this case, the variation in the ignition timing among the cylinders is increased and therefore the reduction in the output and torque of the engine E is concerned.

At this time, for example, as indicated by an arrow in Fig. 3 (b), it is difficult to exhibit a predetermined engine performance when the retard quantity of the respective cylinders is caused to match that of the cylinder where the retard quantity is the smallest and thus the ignition timing of all cylinders becomes constant. Further, particularly, reduction in the output for a high-load region is caused when the retard quantity of the respective cylinders is caused to match that of the cylinder where the retard quantity is the largest.

Accordingly, the present invention is adapted to adjust, for the respective cylinders, a ratio of an injection quantity between the fuel injection by the direct injection valve 10 and the fuel injection by the port injection valve 9, as shown by the solid line in the upper side of Fig. 4. In the present embodiment, a direct injection ratio of a first cylinder, i.e., a ratio of a fuel injection quantity of the first cylinder by the direct injection valve, which is occupied in the whole fuel injection quantity, is set to be high. On the contrary, a direct injection ratio of a fourth cylinder is set to be low. Further, a direct injection ratio of a second cylinder and a direct injection ratio of a third cylinder are set as intermediate values.

Thereby, as shown by the solid line in the lower side of Fig. 4, it is realized to suppress variation in the ignition timing among the cylinders. The retard quantity of the respective cylinders after changing the direct injection ratio is newly calculated by the ignition timing adjustment means 26.

Similar to Fig. 3, the broken lines in Fig. 4 indicate the data of a conventional engine control where the knock control by the adjustment of the direct injection ratio is not performed.

Adjustment of the direct injection ratio is performed by the ratio determination means 24. Based on the adjustment, the fuel injection command is transmitted to the direct injection execution means 22 and the port injection execution means 23.

Here, by increasing the ratio of the fuel injection by the direct injection valve 10 for a particular cylinder, it is possible to advance the ignition timing of the particular cylinder determined by the ignition timing adjustment means 26. Further, by decreasing the ratio of the fuel injection by the direct injection valve 10 for a particular cylinder, it is possible to retard the ignition timing of the particular cylinder determined by the ignition timing adjustment means 26. With this adjustment, the variation in the retard quantity and the ignition timing among the cylinders is suppressed. Although it is desirable that the retard quantity and the ignition timing are the same among all cylinders, it is considered that variation in the retard quantity and the ignition timing does not affect the output and torque of the engine E when the variation falls within a predetermined range.

Based on the optimal values which are calculated through the repetitive execution of the ratio determination means 24 and the ignition timing adjustment means 26, the following is performed. That is, when the ratio of the fuel injection quantity by the direct injection valve 10 increases by a certain degree, it is determined how much correction can be made for the ignition timing (i.e., how much the retard quantity can be reduced), or, when the ratio of the fuel injection quantity by the direct injection valve 10 decreases by a certain degree, it is determined how much correction can be made for the ignition timing (i.e., how much the retard quantity can be increased). Further, the ratio of the fuel injection quantity by the direct injection valve 10 may be determined on the basis of the data stored in the electronic control unit 20 in advance. Furthermore, a learning function (to be described later) by the operating condition storage means 25 may be used.

In this case, as a predetermined range that is allowed with respect to the variation in the retard quantity among the cylinders, for example, there is a method of setting the predetermined range toward a retard side from a reference value. Here, the reference value is defined as the ignition timing of the cylinder where the ignition timing determined by the ignition timing adjustment means 26 in a state before the adjustment of the ratio of the injection quantity is the earliest. Specifically, a ratio between the fuel injection quantity of the direct injection valve 10 and the fuel injection quantity of the port injection valve 9 is set so that the ignition timing of all cylinders falls within a predetermined range (a predetermined angle) from the ignition timing of the cylinder where the ignition timing is the earliest (see, the predetermined range α shown in Fig. 4).

Further, as another example, there is a method of setting, as a median value of the predetermined range, an average value of the ignition timing of the respective cylinders determined by the ignition timing adjustment means 26, in a state before the adjustment of the ratio of the injection quantity. Specifically, the ratio between the fuel injection quantity of the direct injection valve 10 and the fuel injection quantity of the port injection valve 9 is set so that an average value of the ignition timing of the respective cylinders is a median value of the predetermined range and the ignition timing of all cylinders falls within a predetermined range (a predetermined angle) whose median value is the average value.

When the knock control by the adjustment of the ratio of the injection quantity is completed, the process proceeds to Step S6.

In Step S6, the operating condition storage means 25 stores information on occurrence of knocking by the knock detection means 34, the ignition timing of the respective cylinders, which is determined by the ignition timing adjustment means 26 based on the information on occurrence of knocking, the predetermined range set in advance, and the ratio between the fuel injection quantity by the direct injection valve 10 and the fuel injection quantity by the port injection valve 9, which is determined by the ratio determination means 24.

Then, the data stored can be utilized as information for determining a ratio of the fuel injection quantity by the direct injection valve 10 when knocking occurs. Specifically, it is possible to securely make the ignition timing and the retard quantity falling within a predetermined range by commanding the same ratio of fuel injection as the data in the past when the same operating conditions are present in the past. By using the learning function as described above, a precise engine control according to the vehicle V and the engine E is possible.

In the normal engine E, the fuel injected from the direct injection valve 10 and the fuel injected from the port injection valve 9 are supplied from the same fuel tank 30. Therefore, it is typical that the fuel injected from the direct injection valve 10 and the fuel injected from the port injection valve 9 have the same octane number.

However, the present invention increases the fuel injection quantity by the direct injection valve 10, thereby reducing the retard quantity of the ignition timing. Therefore, it is possible to further improve the effect of reducing variation in the retard quantity and the ignition timing by causing the octane number of the fuel injected from the direct injection valve 10 to be greater than that of the fuel injected from the port injection valve 9, for example.

Although a four-cycle gasoline engine for a vehicle has been described as an example in each of the embodiments described above, the present invention is not limited to these embodiments. For example, the present invention may be applied to a two-cycle gasoline engine. Further, the present invention may be applied to a reciprocating engine that can be used in various transport equipment other than the vehicle and industrial machinery.

## Claims

1. An engine control device comprising:
a plurality of cylinders;
a direct injection valve that directly injects fuel into the cylinders;
a port injection valve that injects fuel into an intake port;
a ratio determination unit that determines a ratio between a fuel injection quantity by the direct injection valve and a fuel injection quantity by the port injection valve, for respective cylinders;
a knock detection unit that detects knocking that occurs in the respective cylinders; and
an ignition timing adjustment unit that sets ignition timing of the respective cylinders based on information on occurrence of the knocking by the knock detection unit, by delaying the ignition timing of the cylinder in which the knocking is detected by the knock detection unit,
wherein the ratio determination unit adjusts, for the respective cylinders, a ratio of the injection quantity between the fuel injection by the direct injection valve and the fuel injection by the port injection valve so that variation in the ignition timing among the cylinders, which is caused as a result of setting the ignition timing for the respective cylinders by the ignition timing adjustment unit, falls within a predetermined range.

2. The engine control device according to claim 1, wherein the predetermined range is set toward a retard side from a reference value, the reference value being defined as the ignition timing of the cylinder where the ignition timing determined by the ignition timing adjustment unit in a state before the adjustment of the ratio of the injection quantity is the earliest.

3. The engine control device according to claim 1, wherein the predetermined range is set so that an average value of the ignition timing of the respective cylinders determined by the ignition timing adjustment unit in a state before the adjustment of the ratio of the injection quantity is a median value of the predetermined range.

4. The engine control device according to any one of claims 1 to 3, wherein the ratio determination unit advances the ignition timing determined by the ignition timing adjustment unit by increasing the ratio of the fuel injection by the direct injection valve and retards the ignition timing determined by the ignition timing adjustment unit by decreasing the ratio of the fuel injection by the direct injection valve.

5. The engine control device according to any one of claims 1 to 4, further comprising an operating condition storage unit that stores:
information on occurrence of knocking detected by the knock detection unit;
variation in the ignition timing among the cylinders, which is determined by the ignition timing adjustment unit based on the information on occurrence of knocking;
the predetermined range; and
the ratio of the injection quantity between the fuel injection by the direct injection valve and the fuel injection by the port injection valve, which is determined by the ratio determination unit,
wherein the ratio determination means adjusts the ratio of the injection quantity between the fuel injection by the direct injection valve and the fuel injection by the port injection valve, based on the information stored in the operating condition storage means.

6. The engine control device according to any one of claims 1 to 5, wherein the octane number of the fuel injected from the direct injection valve is different from that of the fuel injected from the port injection valve.

## Patentansprüche

1. Motorsteuervorrichtung, die aufweist:
mehrere Zylinder;
ein Direkteinspritzventil, das Kraftstoff in die Zylinder direkt einspritzt;
ein Kanaleinspritzventil, das Kraftstoff in einen Einlasskanal einspritzt;
eine Verhältnisbestimmungseinheit, die ein Verhältnis zwischen einer Kraftstoffeinspritzmenge durch das Direkteinspritzventil und einer Kraftstoffeinspritzmenge durch das Kanaleinspritzventil für jeweilige Zylinder bestimmt;
eine Klopfdetektionseinheit, die Klopfen detektiert, das in den jeweiligen Zylindern auftritt; und
eine Zündzeit-Einstelleinheit, die eine Zündzeit der jeweiligen Zylinder auf der Grundlage von Informationen über Auftreten des Klopfens durch die Klopfdetektionseinheit festlegt, indem sie die Zündzeit des Zylinders verzögert, in dem das Klopfen durch die Klopfdetektionseinheit detektiert wird,
wobei die Verhältnisbestimmungseinheit für die jeweiligen Zylinder ein Verhältnis der Einspritzmenge zwischen der Kraftstoffeinspritzung durch das Direkteinspritzventil und der Kraftstoffeinspritzung durch das Kanaleinspritzventil so einstellt, dass eine Variation der Zündzeit unter den Zylindern, die als Ergebnis der Festlegung der Zündzeit für die jeweiligen Zylinder durch die Zündzeit-Einstelleinheit verursacht wird, in einen vorbestimmten Bereich fällt.

2. Motorsteuervorrichtung nach Anspruch 1, wobei der vorbestimmte Bereich zu einer Spätverstellungsseite gegenüber einem Referenzwert festgelegt wird, wobei der Referenzwert als Zündzeit des Zylinders definiert ist, in dem die Zündzeit in der Bestimmung durch die Zündzeit-Einstelleinheit in einem Zustand vor Einstellung des Verhältnisses der Einspritzmenge am frühesten liegt.

3. Motorsteuervorrichtung nach Anspruch 1, wobei der vorbestimmte Bereich so festgelegt wird, dass ein Mittelwert der Zündzeit der jeweiligen Zylinder in der Bestimmung durch die Zündzeit-Einstelleinheit in einem Zustand vor Einstellung des Verhältnisses der Einspritzmenge ein Medianwert des vorbestimmten Bereichs ist.

4. Motorsteuervorrichtung nach einem der Ansprüche 1 bis 3, wobei die Verhältnisbestimmungseinheit die durch die Zündzeit-Einstelleinheit bestimmte Zündzeit nach früh verstellt, indem sie das Verhältnis der Kraftstoffeinspritzung durch das Direkteinspritzventil erhöht, und die durch die Zündzeit-Einstelleinheit bestimmte Zündzeit nach spät verstellt, indem sie das Verhältnis der Kraftstoffeinspritzung durch das Direkteinspritzventil verringert.

5. Motorsteuervorrichtung nach einem der Ansprüche 1 bis 4, ferner mit einer Betriebsbedingungs-Speichereinheit, die speichert:
Information über Auftreten von Klopfen, das durch die Klopfdetektionseinheit detektiert wird;
Variation der Zündzeit unter den Zylindern, die durch die Zündzeit-Einstelleinheit auf der Grundlage der Informationen über Auftreten von Klopfen bestimmt wird;
den vorbestimmten Bereich; und
das Verhältnis der Einspritzmenge zwischen der Kraftstoffeinspritzung durch das Direkteinspritzventil und der Kraftstoffeinspritzung durch das Kanaleinspritzventil, das durch die Verhältnisbestimmungseinheit bestimmt wird,
wobei die Verhältnisbestimmungseinrichtung das Verhältnis der Einspritzmenge zwischen der Kraftstoffeinspritzung durch das Direkteinspritzventil und der Kraftstoffeinspritzung durch das Kanaleinspritzventil auf der Grundlage der Informationen einstellt, die in der Betriebsbedingungs-Speichereinrichtung gespeichert sind.

6. Motorsteuervorrichtung nach einem der Ansprüche 1 bis 5, wobei sich die Oktanzahl des aus dem Direkteinspritzventil eingespritzten Kraftstoffs von der des aus dem Kanaleinspritzventil eingespritzten Kraftstoffs unterscheidet.

## Revendications

1. Dispositif de commande de moteur, comprenant :
une pluralité de cylindres ;
une soupape d'injection directe qui injecte directement du carburant dans les cylindres ;
une soupape d'injection d'orifice qui injecte du carburant dans un orifice d'admission ;
une unité de détermination de rapport qui détermine un rapport entre une quantité d'injection de carburant par la soupape d'injection directe et une quantité d'injection de carburant par la soupape d'injection d'orifice, pour des cylindres respectifs ;
une unité de détection de cliquetis qui détecte un cliquetis survenant dans les cylindres respectifs ; et
une unité d'ajustement de timing d'allumage qui règle un timing d'allumage des cylindres respectifs sur la base d'informations relatives à une survenance du cliquetis par l'unité de détection de cliquetis, en retardant le timing d'allumage du cylindre dans lequel le cliquetis est détecté par l'unité de détection de cliquetis,
dans lequel l'unité de détermination de rapport ajuste, pour les cylindres respectifs, un rapport de la quantité d'injection entre l'injection de carburant par la soupape d'injection directe et l'injection de carburant par la soupape d'injection d'orifice de sorte qu'une variation du timing d'allumage parmi les cylindres, qui est provoquée en conséquence d'un réglage du timing d'allumage pour les cylindres respectifs par l'unité d'ajustement de timing d'allumage, se trouve à l'intérieur d'une plage prédéterminée.

2. Dispositif de commande de moteur selon la revendication 1, dans lequel la plage prédéterminée est réglée vers un côté de retard par rapport à une valeur de référence, la valeur de référence étant définie comme le timing d'allumage du cylindre où le timing d'allumage déterminé par l'unité d'ajustement de timing d'allumage dans un état avant l'ajustement du rapport de la quantité d'injection est le plus précoce.

3. Dispositif de commande de moteur selon la revendication 1, dans lequel la plage prédéterminée est réglée de sorte qu'une valeur moyenne du timing d'allumage des cylindres respectifs déterminé par l'unité d'ajustement de timing d'allumage dans un état avant l'ajustement du rapport de la quantité d'injection soit une valeur médiane de la plage prédéterminée.

4. Dispositif de commande de moteur selon l'une quelconque des revendications 1 à 3, dans lequel l'unité de détermination de rapport avance le timing d'allumage déterminé par l'unité d'ajustement de timing d'allumage en augmentant le rapport de l'injection de carburant par la soupape d'injection directe et retarde le timing d'allumage déterminé par l'unité d'ajustement de timing d'allumage en réduisant le rapport de l'injection de carburant par la soupape d'injection directe.

5. Dispositif de commande de moteur selon l'une quelconque des revendications 1 à 4, comprenant en outre une unité de mémorisation de conditions de fonctionnement qui mémorise :
des informations relatives à une survenance d'un cliquetis détectée par l'unité de détection de cliquetis ;
une variation du timing d'allumage parmi les cylindres, qui est déterminée par l'unité d'ajustement de timing d'allumage sur la base des informations relatives à une survenance d'un cliquetis ;
la plage prédéterminée ; et
le rapport de la quantité d'injection entre l'injection de carburant par la soupape d'injection directe et l'injection de carburant par la soupape d'injection d'orifice, qui est déterminé par l'unité de détermination de rapport,
dans lequel les moyens de détermination de rapport ajustent le rapport de la quantité d'injection entre l'injection de carburant par la soupape d'injection directe et l'injection de carburant par la soupape d'injection d'orifice, sur la base des informations mémorisées dans les moyens de mémorisation de conditions de fonctionnement.

6. Dispositif de commande de moteur selon l'une quelconque des revendications 1 à 5, dans lequel l'indice d'octane du carburant injecté par la soupape d'injection directe est différent de celui du carburant injecté par la soupape d'injection d'orifice.
